(19) Europäisches Patentamt
European Patent Office
Office européen des brevets

(11) **EP 3 929 576 A1**

(12) **EUROPEAN PATENT APPLICATION**

(43) Date of publication:
**29.12.2021 Bulletin 2021/52**

(51) Int Cl.:
*G01N 27/333* (2006.01)

(21) Application number: **20182319.2**

(22) Date of filing: **25.06.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Technische Universität München
80333 München (DE)**

(72) Inventors:
• **Pfeffer, Christian
94551 Lalling (DE)**
• **Zips, Sabine
81371 München (DE)**

(74) Representative: **Lucke, Andreas
Boehmert & Boehmert
Anwaltspartnerschaft mbB
Pettenkoferstrasse 22
80336 München (DE)**

(54) **METHOD OF FORMING AN ACRYLATE-BASED IONIC SENSOR AND CORRESPONDING APPARATUS**

(57)    A method of forming an ionic sensor comprising providing a substrate (12) and depositing a conductive ink selectively over the substrate to form a first pair of conductive electrodes (14a, 14b) on the substrate, depositing a first acrylate based ink (16) selectively over the first pair of electrodes, the first acrylate based ink comprising a catalyst and a first ionophore, and curing the first acrylate based ink to form a first ion selective membrane layer over the first pair of electrodes.

Fig. 1

**Description**

FIELD OF THE INVENTION

The present invention is in the field of electrochemical ion sensing. More precisely, the present invention relates to concentration measurements of target ions suspended in solution with membrane based sensors.

BACKGROUND

The measurement of the concentration of a target ion can have a wide variety of applications such as biomedical sensing, e.g. monitoring action potentials of neurons, heart cell activity or blood analysis; sensing applications in agriculture, e.g. nutrient and soil analysis, environmental studies of water quality, or even sampling in food industry. Analytical chemistry offers optical, mechanical, biochemical and electrochemical measurement techniques for sensing ion concentrations each with their respective advantages and disadvantages.

One way to selectively measure the presence of a target ion is to detect a bonding of the target ion to a corresponding ionophore. Ionophores are chemical species that reversibly bind ions, with the binding rate or stability of the bound complex being higher for a specific target ion. These specific binding kinetics are then exploited to fabricate ion specific sensors. For example, the binding kinetics may involve a conformation change of the ionophore leading to a change of the (di-)electric or electrochemical properties of the ionophore, such as a polarization change of the ionophore in the presence of the target ion. An electrochemical measurement of the changed property of the ionophore in a sensor can then allow for inferring a relative or absolute concentration of the target ion in an analyte solution.

Day et al. ("Impedance based sensor for potassium ions", Analytica Chimica Acta, Vol. 1034, p. 39-45, 11-2018) discloses a conductometric ionic sensor for potassium ions. The sensor is fabricated by dipping a sensor arrangement of interdigital gold electrodes on a glass substrate into a PVC based solution containing plasticizer and a potassium specific ionophore dissolved in a THF solvent. After evaporation of the THF solvent, the PVC based solution forms a membrane over the electrodes with the ionophore incorporated into the membrane. The resulting membrane features a frequency dependent conductivity of the interdigital gold electrodes which is altered based on the potassium concentration to which the sensor is exposed.

Aicher et al. ("A novel thin film impedance Ca ion sensor for drinking water", Sensors and Actuators B 244 (2017) 11103-1112) discloses an ionic Ca sensor wherein a printable interdigital electrode structure is fabricated without a conventional PVC membrane to avoid membrane cross-selectivity and membrane swelling effects. Instead, the substrate surface is partially functionalized with ionophores and the conductivity difference between non-functionalized and functionalized sensor regions is assessed to derive a Ca ion concentration in an analyte solution.

Heng et al. ("Producing "Self-Plasticizing"Ion Selective Membranes", Anal. Chem. 2000, 72, 42-51) discloses acrylate based solutions for forming polymer membranes containing ionophores. Potentiometric sensors are fabricated from the polymer membranes by casting the membranes and cutting the membrane to fit an end of a Teflon electrode body or by depositing the membrane solution on Ag/AgCl disks.

SUMMARY OF THE INVENTION

The known ion sensor fabrication methods however either result in bulky devices with large reference electrodes, or result in impractical devices which can be susceptible to mechanical damage. The conventional PVC membranes containing the ionophores rely on dissolution of the membrane material in a solvent for dip coating sensor structures and therefore can suffer from voids and irregularities in the membrane appearing during solvent evaporation. Further, ionophore containing membranes based on PVC are incompatible with printing technology due to the high viscosity of corresponding casting solutions and the clogging of print heads when the solution is heated, such that available ionic sensors are difficult to fabricate and expensive. Prior art devices implementing printing technology circumvent membrane deposition by surface functionalization of the substrate with ionophores. Hence, an efficient method of forming practical ion sensors and corresponding devices with improved characteristics have remained elusive.

In view of this state-of-the-art, the object of the invention is to provide a method of forming an ionic sensor overcoming the shortcomings of prior art fabrication methods and resulting in more efficient devices.

This object is solved by a method of forming an ionic sensor and corresponding devices according to the independent claims. The dependent claims relate to preferred embodiments.

According to a first aspect, the invention relates to a method of forming an ionic sensor. The method comprises providing a substrate and depositing a conductive ink selectively over the substrate to form a first pair of conductive electrodes on the substrate. Further, the method comprises depositing a first acrylate based ink selectively over the first pair of electrodes, the first acrylate based ink comprising a catalyst and a first ionophore, and curing the first acrylate based ink to form a first ion selective membrane layer over the first pair of electrodes.

The inventors found that an acrylate based ink for forming the ionophore containing membrane can be compatible with high-throughput ink deposition systems while it may at the same time allow for forming an efficient ion selective membrane after ink-jet deposition. Ink deposition systems have acquired deposition accuracy of a few micrometers while progressively performant conductive inks are being developed, such that miniaturized and cheap devices can be obtained using ink-deposition based manufacturing methods. The acrylate based ink may comprise at least 50 wt%, preferably at least 65 wt%, of acrylate monomers or intermediate Homo-/Copolymers derived therefrom. The pair of electrodes with the ion selective membrane selectively deposited over it may then be excited with a time varying excitation to perform a conductometric/impedimetric measurement of a target ion concentration in an analyte solution without a reference electrode. Consequently, a fully printed ionic sensor or at least a partly printed sensor with a printed sensing structure may be obtained.

The conductive ink and/or the first acrylate based ink may be selectively deposited by additive selective deposition to form the first pair of conductive electrodes and the ion selective membrane layer, respectively. In the context of this disclosure, selective deposition should be understood as providing control over the deposition location and deposition thickness as opposed to non-selective drop casting or dip coating of the inks over the entire substrate or large substrate portions. In other words, the first acrylate based ink may be deposited only in the active sensing region of the first pair of conductive electrodes, respectively. Hence, manufacturing costs due to the costs of the respective inks may be reduced. In particular, the ionophore components may constitute the most expensive components of the first acrylate based ink and/or the ionic sensor, so that the overall sensor costs may be reduced by selective deposition of the first acrylate based ink in a sensing region of the first pair of electrodes while adjacent regions may remain free of the first acrylate based ink. The sensing region may be the region associated with the first pair of electrodes where the spacing between the electrodes is minimal and substantially constant, and/or which dominates the impedimetric response of the ionic sensor based on the first pair of electrodes.

In preferred embodiments, the acrylate based ink is selectively deposited by printing, in particular ink-jetting, aerosol-jetting or screen-printing, the acrylate based ink over the pair of electrodes.

In particular, the acrylate based ink may be deposited based on piezoelectric actuation of the first acrylate based ink in a printhead to avoid thermal strain on the membrane components and to avoid incorporating low boiling point ink components in the acrylate based ink.

In preferred embodiments, the conductive ink is deposited on the substrate by selectively printing, in particular ink-jetting, the conductive ink over the substrate.

The acrylate based ink containing the ionophore and the conductive ink should be jettable with an ink-jet printhead. In other words, the composition of the first acrylate based ink may be adjusted to yield a viscosity compliant with ink-jet printing to form uniform and smooth layers with controllable thickness when deposited with an ink-jet print head. For the acrylate based ink to be considered jettable, these layers should be formed reliably and in a reproducible manner with a lateral resolution below 200 μm and without the layers exhibiting serious printing detriments such as the coffee stain effect or print head clogging. Preferably, the acrylate based ink is compatible with additive manufacturing, such that the acrylate based ink does not dissolve cured layers of the ion selective membrane.

In preferred embodiments, the first acrylate based ink has a viscosity between 1-40 mPa·s, in particular between 5-40 mPa·s, before selectively depositing the first acrylate based ink over the first pair of electrodes.

A viscosity between 1 and 5 mPa·s may be compatible with thermal ink-jet printers while a viscosity between 5-40 mPa·s may be compatible with piezoelectric ink-jet print heads. The inventors found that an advantegous compromise for the viscosity of the first acrylate based ink, the crosslinking density, the membrane elasticity and the solubility of the ionophores in the acrylate based ink may be achieved by mixing different acrylate components with different alkyl group chain lengths.

In preferred embodiments, the first acrylate based ink comprises at least 15%wt or at least 20 wt% of a first acrylate component, the first acrylate component comprising a longer alkyl group than butyl acrylate, and in particular consists of one or more monomers selected from the group of Hexyl acrylate, Hexyl methacrylate, 2-Ethylhexyl acrylate, 2-Ethylhexyl methacrylate, Heptyl acrylate, Octyl acrylate, Octyl methacrylate, Nonyl acrylate, Nonyl methacrylate, Decyl methacrylate, Dodecyl acrylate, Dodecyl methacrylate, and Octadecyl methacrylate.

Introducing at least 15%wt or at least 20 wt% of the first acrylate component into the first acrylate based ink may improve solubility of the ionophores in a jettable ink without the addition of a solvent or a plasticizer as well as reduce the glass transition temperature of the first ion selective membrane, such that a jettable acrylate based ink with a homogeneous distribution of ionophores may be obtained which forms a working membrane after curing. For efficient sensing, the first ion selective membrane layer should have a glass transition temperature below -20 °C.

In preferred embodiments, the first acrylate based ink comprises a second acrylate component, the second acrylate component being derived from methyl acrylate, ethyl acrylate, propyl acrylate or butyl acrylate, and in particular consists of one or more monomers selected from the group of Methyl acrylate, Ethyl acrylate, Propyl acrylate, Isopropyl acrylate, Butyl acrylate, Isobutyl acrylate, sec-Butyl acrylate, 2-Ethylbutyl acrylate.

The second acrylate component may introduce a higher cross-linking density than the first component for improved ionophore retention and/or reduced membrane swelling. Preferably, the membrane exhibits less than 200% v/v, in particular less than 100% v/v, of swelling in aqueous solutions. The second acrylate component may further reduce the viscosity of the first acrylate based ink to allow ink-jetting of the first acrylate based ink. In some embodiments, the acrylate based ink comprises at least 20%, preferably at least 50%, of the second acrylate component. In particular, butyl acrylate monomers may be used as the second acrylate components to obtain an advantageous compromise between glass transition temperature, viscosity and surface wetting behavior of common substrates. In some embodiments, the first acrylate based ink comprises up to 85 wt%, and/or at least 50 wt%, in particular at least 60 wt%, of butyl acrylate.

In some embodiments, the concentration of the first acrylate component and of the second acrylate component is adjusted such that the first acrylate based ink has a viscosity between 1-40 mPa·s.

In preferred embodiments, the first acrylate based ink does not comprise more than 10 wt% of a plasticizer, in particular less than 5 wt% of a plasticizer, preferably no plasticizer, and/or does not comprise a solvent.

Conventional membrane casting solutions usually comprise plasticizers such as phthalates, terephtalates, epoxies, aliphatics, or trimellitates to decrease the plasticity or to decrease the viscosity of a material. However, plasticizer may impede photocuring and cause adhesion problems on common substrates. As the ink usually needs to be cured when deposited in a selective deposition process, such as ink-jet printing, the use of plasticizer may reduce process efficiency and sensor efficiency.

Similarly, solvents commonly used for the deposition of membranes onto sensor structures, such as THF, may equally be used to reduce the viscosity of the first acrylate based ink for selective deposition. However, evaporation of solvent may reduce the density and/or homogeneity of the membrane and may therefore adversely affect sensor performance. Further, the solvent may dissolve the first ion selective membrane. Hence, in preferred embodiments the first acrylate based ink comprises at least substantially no solvent, such as below 10 wt%, in particular below 5 wt%, preferably below 2 wt%, of solvent.

The catalyst may in general be a photoactive or thermal catalyst, and curing the first acrylate based ink may comprise irradiating the first acrylate based ink with ultraviolet radiation or heating the first acrylate based ink, respectively.

In preferred embodiments, the catalyst is a photoinitiator and curing the first acrylate based ink comprises photocuring the first acrylate based ink with irradiation adapted to activate the photoinitiator, wherein the photoinitiator and its concentration in the first acrylate based ink are in particular selected to obtain gelation of the first ion selective membrane layer after an irradiation dose of less than 10 J cm$^{-2}$.

Photocuring of the first acrylate based ink may improve process speed and can be integrated into the deposition process. For example, selectively deposited ink may be photocured directly following selective deposition of a layer of ink, e.g. with an ink-jet print head. The photoinitator or photoactive catalyst should be chosen to promote and/or initiate a polymerization of the first acrylate based ink when irradiated with light of a certain wavelength. In some embodiments, the first acrylate based ink comprises between 0.25 and 5 wt% of the photoinitiator. Common examples of suitable potoinitiators may be 1-Hydroxy-cyclohexylphenylketone, Bis(2,4,6-trimethylbenzoyl)phenylphosphine oxide (Omnirad 819), Ethyl (2, 4, 6-trimethylbenzoyl)-phenyl-phosphinate (Omnirad TPO-L), 2-hydroxy-2-methyl-1-phenylpropanone (Omnirad 1173), 1-[4-(2-hydroxyethoxyl)-phenyl]-2-hydroxy-methylpropanone (Omnirad 2959), blends thereof or the like, or may be selected from 2,2-Dimethoxy-2-phenylacetophenone, 2,2-Azoisobutyronitrile, 2-Hydroxy-2-methyl-1-phenylpropanone, 1-Hydroxy-cyclohexylphenylketone, Benzophenone, Isopropyl thioxanthone, or the like, in combination with a synergist such as tertiary amines (2-ethylhexyl-(4-N,N-dimethyl amino)benzoate, 2-ethyl-(4-N,N-dimethylamino)benzoate or the like, or any mixture thereof.

In some embodiments, the first acrylate based ink further comprises a crosslinker, in particular up to 10 wt% of crosslinker molecules.

The crosslinker may be acrylate based, in particular diacrylate, triacrylate or tetraacrlyte based, and may comprise at least two acryloyl groups. For example, the crosslinker may be selected from 1,3-Propanediol diacrylate, 1,4-Butanediol diacrylate, 1,6-Hexanediol diacrylate, Ethylene glycol diacrylate, Di(ethylene glycol) diacrylate, Tri(propylene glycol)-diacrylate, Tetra(ethylene glycol) diacrylate, or the like, and a plurality of crosslinker molecules may be combined.

In preferred embodiments, the substrate comprises an insulating sheet, in particular a polymer based flexible substrate, preferably a PEN, PET, and/or polyimide based substrate, such as a PEN, PET, and/or polyimide based foil.

The inventors found that the first acrylate based ink showed good surface wetting of hydrophobic, and in particular polymer substrates, leading to good deposition dynamics. Further, insulating sheets can be versatile substrates to build lab-on-a-chip devices, such as devices for one time use. In some embodiments, the substrate is printed with a polymer based printing material, such as a build material or ink. Additionally or alternatively, the substrate may be or comprise a Silicon based wafer, such as a Si-Wafer, a SOI-wafer, a silicon oxide wafer, or the like.

In some embodiments, the ratio of first acrylate component, the second acrylate component and the crosslinker are adjusted such that the first ion selective membrane has an elastic modulus above 100 kPa and/or has a shear adhesive strength above 10 kPa with respect to the substrate.

In preferred embodiments, the method comprises depositing multiple layers of the first acrylate based ink over the first pair of electrodes to form a first ion selective membrane.

Selectively depositing a plurality of layers may allow for obtaining ion selective membranes with a predetermined thickness in a printing process. As compared to prior art solutions depositing thick membranes, the first acrylate based ink may be deposited in thin layers, such as layers having a thickness of about 1-3 $\mu$m and a target amount of layers at a specific location of the substrate may be built up from the thin layers. For example, the thickness may be adjusted to an electrode geometry of the first pair of electrodes, such as a spacing of the pair of electrodes, or may be adjusted to a diffusion length of an analyte solution into the membrane, such as to adapt the sensitivity of the ionic sensor. In some embodiments, the membrane comprises between 2 and 10 layers to obtain an advantageous compromise between sensor efficiency and analyte solution diffusion into the membrane. Each of the multiple first ion selective membrane layers may be cured before the next layer of the acrylate based ink is deposited.

In preferred embodiments, the method further comprises depositing a second pair of electrodes over the substrate, selectively depositing a second acrylate based ink over the second pair of electrodes, the acrylate based ink having substantially the same composition as the first acrylate based ink but does not contain the first ionophore, and curing the second acrylate based ink to form a reference membrane layer over the second pair of electrodes.

In practice, the membrane may give rise to an electrochemical response which may be independent from the ionophore and superimposed on the electrochemical response of the ionophore. Fabricating a reference member layer over the second pair of electrodes may allow for compensating for an electrochemical effect originating from the acrylate based membrane material by exciting both the first and second pairs of electrodes with the same time-varying signal and determining a difference of the electrochemical response of the first ion selective membrane and the reference membrane. The reference membrane layer and the ion selective membrane layer may be fabricated using an inkjet printer with different acrylate based inks in the same printing process, thereby obtaining a fully printed and accurate ionic sensor with an efficient fabrication process.

In preferred embodiments, the method further comprises depositing a third pair of electrodes over the substrate, selectively depositing a third acrylate based ink over the third pair of electrodes, the third acrylate based ink comprising a catalyst and a second ionophore, the second ionophore being different from the first ionophore, and curing the third acrylate based ink to form a second ion selective membrane layer over the third pair of electrodes.

The first and the third pair of electrodes may allow simultaneous measurement of the ionic concentrations of different ions in a target analyte solution. The first ionophore may also be cross-selective to different irons, such that systematic errors of the ionic concentration measurement with the ionic sensor may occur in the presence of different ions than the target ion. Using a plurality of sensors, the cross-selectivities of the respective ionophores may be compensated with membranes incorporating different ionophores. Further, the second ionophore may also be targeting the same target ion but may be sensitive to a different concentration range of the target ion in an analyte solution to extend the sensitivity of the sensor based on the first ion selective membrane. Using an inkjet printer with different acrylate based inks one can fabricate a versatile and/or more selective ionic sensor in the same printing process, which maybe a fully printed ionic sensor.

In preferred embodiments, the method further comprises depositing a fourth pair of electrodes over the substrate, selectively depositing the first acrylate based ink over the fourth pair of electrodes, and curing the first acrylate based ink to form a third ion selective membrane over the fourth pair of electrodes, wherein the third ion selective membrane layer has a thickness which is different from a thickness of a first ion selective membrane formed from one or more of the first ion selective membrane layers.

Adjusting the thickness of the membrane may allow recording diffusion dependent effects in the same sensor. For example, a thicker membrane may give rise to a lower electrochemical response to a given target ion concentration due to a limited diffusion of the ions towards the first/fourth pair of electrodes. Different concentration regimes may then be targeted by measuring the impedimetric response of both pairs of electrodes consecutively or at the same time. Depending on the application, the target measurement range may vary significantly. By adjusting the height or form of the membrane, the system may be adapted towards a target application, thus increasing selectivity, sensitivity, resolution, and decreasing cross-sensitivities for said target application.

In preferred embodiments, the method further comprises depositing an insulating ink over the substrate to insulate the first pair of electrodes in a region adjacent to the first ion selective membrane layer and/or to form a well surrounding the first ion selective membrane layer, the well being configured to contain an analyte solution.

By depositing the insulating ink over the substrate, such as a PMMA based ink, an integrated and fully printed ionic sensor may be formed. By forming the well surrounding the first ion selective membrane layer with an insulating ink, portions of a lab-on-a-chip device for analyzing fluid samples, such as blood, water, or the like, may be provided in an integrated fabrication process.

In some embodiments, the method comprises depositing and curing an insulating ink to form a channel of a microfluidic device over the first ion selective membrane layer, such that the channel coincides with a sensing region of the first pair of electrodes.

In preferred embodiments, the method further comprises depositing an adhesive ink to form an adhesive layer surrounding the first ion selective membrane layer for bonding a chamber to the substrate, the chamber being configured to contain the analyte solution.

Hence, following the printing process, a chamber for holding an analyte solution can be directly bonded to the prepared ionic sensor using the adhesive ink layer.

In some embodiments, the method comprises printing a hydrophilic coating layer over the membrane. The hydrophilic coating layer may improve cell adhesion and may thus allow providing a cell culturing platform with ion analysis capability.

In some embodiments, the first acrylate based ink comprises between 0.1 wt% and 5 wt% of a lipophilic ion exchanger. For example, the first acrylate based ink may comprise tetraphenylborate, tetra(p-tolyl)borate, tetrakis(4-chlorophenyl) borate, tetrakis[3,5-bis(trifluoromethyl)phenyl]borate, tetrakis(4-fluorophenyl)borate dehydrate, or tetrakis[3,5-bis(1,1,1,3,3,3-hexafluoro-2-methoxy-2-propyl)phenyl]borate trihydrate.

The lipophilic ion exchanger may promote ion transfer through the membrane and thus improve sensitivity or selectivity of the ionic sensor.

In preferred embodiments, the first acrylate based ink comprises or substantially consists of between 15 wt% and 99.7 wt% of a first acrylate component comprising an acrylate monomer having a longer alkyl group than butyl acrylate, between 0 wt% and 85 wt% of a second acrylate component consisting of one or more monomers selected from the group of Methyl acrylate, Ethyl acrylate, Propyl acrylate, Isopropyl acrylate, Butyl acrylate, Isobutyl acrylate, sec-Butyl acrylate, 2-Ethylbutyl acrylate, between 0.1 wt% and 15 wt% of a ionophore, between 0.1 wt% and 5 wt% of a lipophilic ion exchanger, between 0 wt% and 10 wt% of a crosslinker, and between 0.1 wt% and 5 wt% of a photoactive catalyst.

In the context of this disclosure the expression substantially consists of should be understood to refer to an ink which consists mostly, and in particular to a portion of at least 75% or to a portion of at least 90 %, of the respective constituents.

In a second aspect, the invention relates to an ionic sensor comprising a substrate, a first pair of printed conductive electrodes comprising printed features formed of a conductive ink printed selectively over the substrate, and one or more first ion selective membrane layers constituting a first ion selective membrane, the one or more first ion selective membrane layers being obtainable by curing a first acrylate based ink selectively deposited over the first pair of electrodes, the first acrylate based ink comprising a first ionophore and a photoactive catalyst, with irradiation adapted to activate the photoactive catalyst.

In preferred embodiments, the first ion selective membrane comprises at least two first ion selective membrane layers. The at least two first ion selective membrane layers may be obtained by sequentially depositing additional layers of the first acrylate based ink over the first ion selective membrane layers and curing the additional layers of the first acrylate based ink to additively form the at least two first ion selective membrane layers of the first ion selective membrane.

In preferred embodiments, the ionic sensor further comprises a second pair of printed conductive electrodes over the substrate, and one or more reference membrane layers obtainable by curing a second acrylate based ink selectively deposited over the second pair of electrodes, the second acrylate based ink having substantially the same composition as the first acrylate based ink but does not contain the first ionophore.

In preferred embodiments, the ionic sensor further comprises a third pair of printed conductive electrodes over the substrate, and one or more second ion selective membrane layers constituting a second ion selective membrane, the one or more second ion selective membrane layers being obtainable by curing a third acrylate based ink comprising a second ionophore and selectively deposited over the third pair of electrodes, the second ionophore being different from the first ionophore.

In preferred embodiments, the ionic sensor comprises an equal number of reference membrane layers and first ion selective membrane layers.

In preferred embodiments, the ionic sensor further comprises a fourth pair of printed conductive electrodes over the substrate, and one or more third ion selective membrane layers over the fourth pair of electrodes constituting a third ion selective membrane, the one or more third ion selective membrane layers being obtainable by curing the first acrylate based ink comprising the first ionophore, wherein the number of first ion selective membrane layers and the number of third ion selective membrane layers are different.

In preferred embodiments, the ionic sensor further comprises one or more insulating layers obtainable by curing an insulating ink selectively deposited in a region adjacent to the one or more first ion selective membrane layers to insulate the first pair of electrodes.

In some embodiments, the ionic sensor further comprises a printed well obtainable by curing an insulating ink selectively deposited to surround the first ion selective membrane layer over the first pair of electrodes, the printed well being configured to contain an analyte solution.

In some embodiments, the ionic sensor further comprises an adhesive layer of or obtainable by curing an adhesive ink, the adhesive layer surrounding the first ion selective membrane layer for bonding a chamber to the substrate, the chamber being configured to contain the analyte solution.

In preferred embodiments, the chamber is bonded to the substrate.

In preferred embodiments, the substrate comprises an insulating sheet, in particular a polymer based insulating sheet, preferably a polymer based flexible substrate, most preferably a PEN, PET, and/or polyimide based foil.

In preferred embodiments, the one or more first ion selective membrane layers have a glass transition temperature below -20 °C.

In preferred embodiments, the first acrylate based ink is selected to have a viscosity between 1-40 mPa·s, in particular between 5-40 mPa·s, for ink-jet printing the first acrylate based ink over the first pair of electrodes.

In preferred embodiments, the one or more first acrylate based membrane layers comprise at least 15%wt or at least 20 wt% of a first acrylate component, the first acrylate component comprising a longer alkyl group than butyl acrylate, and in particular consists of one or more monomers selected from the group of Hexyl acrylate, Hexyl methacrylate, 2-Ethylhexyl acrylate, 2-Ethylhexyl methacrylate, Heptyl acrylate, Octyl acrylate, Octyl methacrylate, Nonyl acrylate, Nonyl methacrylate, Decyl methacrylate, Dodecyl acrylate, Dodecyl methacrylate, and Octadecyl methacrylate.

In preferred embodiments, the one or more first acrylate based membrane layers comprise a second acrylate component, the second acrylate component being derived from methyl acrylate, ethyl acrylate, propyl acrylate or butyl acrylate, and in particular consists of one or more monomers selected from the group of Methyl acrylate, Ethyl acrylate, Propyl acrylate, Isopropyl acrylate, Butyl acrylate, Isobutyl acrylate, sec-Butyl acrylate, 2-Ethylbutyl acrylate.

In preferred embodiments, the first acrylate based ink does not comprise more than 10 wt% of a plasticizer, in particular less than 5 wt% of a plasticizer, preferably no plasticizer, and/or does not comprise a solvent.

In preferred embodiments, the first acrylate based ink consists of between 15 wt% and 99.7 wt% of a first acrylate component comprising an acrylate monomer having a longer alkyl group than butyl acrylate, between 0 wt% and 85 wt% of a second acrylate component consisting of one or more monomers selected from the group of Methyl acrylate, Ethyl acrylate, Propyl acrylate, Isopropyl acrylate, Butyl acrylate, Isobutyl acrylate, sec-Butyl acrylate, 2-Ethylbutyl acrylate, between 0.1 wt% and 15 wt% of a ionophore, between 0.1 wt% and 5 wt% of a lipophilic ion exchanger, between 0 wt% and 10 wt% of a crosslinker, between 0.1 wt% and 5 wt% of a photoactive catalyst.

DETAILED DESCRIPTION OF EMBODIMENTS

The features and numerous advantages of the method and corresponding ionic sensor according to the present invention will best be understood from a detailed description of preferred embodiments with reference to the accompanying drawings, in which:

Fig. 1    illustrates an example of an ionic sensor;

Fig. 2    illustrates a flowchart of a method for forming an ionic sensor;

Fig. 3    illustrates a schematic view of an intermediate stage in an exemplary printing process for forming an ionic sensor;

Fig. 4    illustrates a printed ionic sensor including a reference membrane according to an example;

Fig. 5    illustrates measurements of the impedimetric response of an embodiment of the invention; and

Fig. 6    illustrates a printed ionic sensor with a plurality of sensing structures according to another example.

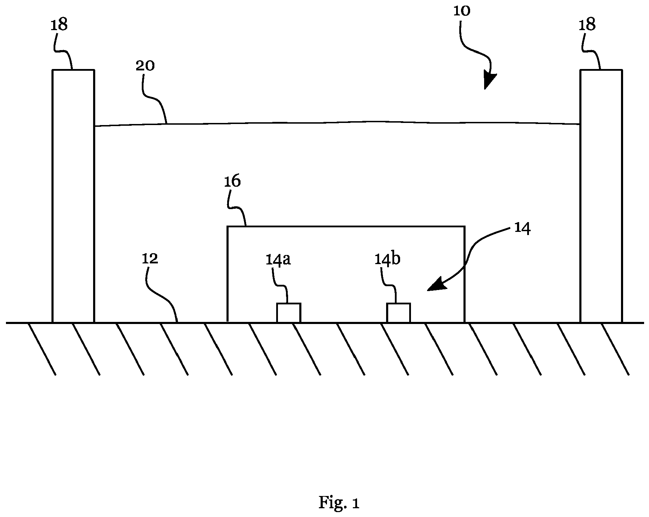

Fig. 1 illustrates an ionic sensor 10 according to an embodiment of the invention. The ionic sensor 10 comprises a substrate 12 having printed thereon a first pair of electrodes 14 consisting of a first electrode 14a and a second electrode 14b also known as a working electrode and a counter electrode. The pair of electrodes 14 can be printed onto the substrate using an ink-based selective deposition system, such as an ink-jet printhead. For example, a conductive ink comprising silver (Ag) nanoparticles may be selectively deposited on the substrate 12 to form the shape of the electrodes 14a, 14b, which may be electro-plated with a second metal, such as gold (Au) from an Au cyanide solution, in case corrosion of the Ag electrodes interferes with the measurement and long-term stability of the ionic sensor 10. After deposition, depending on the selected conductive ink and substrate 12, the printed conductive ink layer may be thermally post-treated at elevated temperatures to ensure a conductivity of above 500 S m$^{-1}$

An ion selective membrane 16 covers the substrate 12 and the pair of electrodes 14 in a laterally limited sensing region of the ionic sensor 10. According to the embodiments of the invention, the ion selective membrane 16 is an acrylate based polymer obtainable by selectively depositing one or more layers of an acrylate based ink comprising a ionophore and a catalyst with an ink-jet printhead in the sensing region of the ionic sensor 10 and curing the acrylate based ink to generate a cross-linked polymer matrix 16 with the ionophores embedded in the membrane 16.

In the sensing region, the pair of electrodes 14 may extend parallel along a common extension direction to define a capacitor arrangement with the ion selective membrane 16 and the substrate 12 as the dielectric. The pair of electrodes 14 is shown in a cross-sectional view of the sensing region in Fig. 1 along the direction of primary extension of the pair of electrodes 14, which may be formed as a pair of parallelly extending conductive traces in the sensing region. The skilled person will however appreciate that the electrodes may in principle be printed with arbitrary shapes. Preferably, a gap between the electrodes 14a, 14b is minimal in the sensing region, such as a gap of less than 100 $\mu$m, e.g. 10 $\mu$m. In some embodiments, the pair of electrodes 14 is formed as interdigital electrodes with two interlocking comb-shaped arrays of electrodes 14a, 14b in order to maximize effective electrode surface of the ionic sensor 10.

A well formed of vertically upstanding walls 18, such as the channel of a lab-on-a-chip device or a fluid chamber glued onto the substrate 12, contains an analyte solution 20 comprising a concentration of a target ion. The ionophores embedded in the ion selective membrane 16 selectively bind to target ions in the analyte solution 20 and thereby affect the electrochemical characteristics of the ionic sensor 10. For example, the ionophore may change its effective dielectric constant when the target ion is bound to the ionophore, such that the capacitance between the electrodes 14a, 14b changes in the presence of the target ions in the analyte solution 20. Preferably, the ionophore is selected such that binding of the target ion to the ionophore changes an impedimetric response of the ion selective membrane.

The ionophore may be selected from a variety of commercially available ionophores affecting the impedimetric characteristics of the acrylate based ion selective membrane layers for a specific target ion. For example, the ionophore may be selected from Ammonium Ionophore I, 4-Bromo-calcium ionophore, Bisulfite ionophore, Cadmium ionophore I, Calcium ionophore I, Calcium ionophore II, Calcium ionophore III, Calcium ionophore IV, Calcium ionophore V, Carbonate ionophore VII, Cerium(III) ionophore, Cesium ionophore II, Cesium ionophore III, Chloride ionophore I, Chloride ionophore II, Chloride ionophore III, Chloride ionophore IV, Chromoionophore XI (pH), Copper(II) ionophore I, Copper(II) ionophore IV, Cyanide Ionophore II, Erbium(III) ionophore I, Fluoride ionophore I, Hydrogen ionophore I, Hydrogen ionophore III, Hydrogen ionophore V, Ionomycin from Streptomyces conglobatus, Iron(III) ionophore VI, Lead ionophore II, Lead ionophore IV, Lithium ionophore I, Lithium ionophore IV, Lithium ionophore VI, Lithium ionophore VIII, Magnesium ionophore I, Magnesium ionophore II, Magnesium ionophore III, Magnesium ionophore IV, Magnesium ionophore VI, Magnesium ionophore VII, Manganese(II) ionophore II, Mercury Ionophore I, Nickel ionophore II, Nitrate ionophore VI, Nitrite ionophore I, Nitrite ionophore VI, Perchlorate ionophore I, Phthalate Ionophore I, Potassium ionophore I, Potassium ionophore II, Potassium ionophore III, Silver ionophore IV, Silver ionophore VII, Sodium ionophore I, Sodium ionophore II, Sodium ionophore III, Sodium ionophore IV, Sodium ionophore V, Sodium ionophore VI, Sodium ionophore VIII, Sodium ionophore X, Sulfate ionophore I, Sulfate ionophore II, Thulium ionophore I, Tin(II) ionophore I, Zinc Ionophore I, Zinc Ionophore IV, depending on the respective target ion. As an example, a sodium ion selective membrane may be prepared using Ionophore Na X (Sodium Ionophore X) as the ionophore.

According to the invention, the ionophore is selectively deposited with a membrane forming acrylate based ink which is cured to obtain the ion selective membrane 16 in a process allowing the manufacture of ionic sensor devices 10 through ink-jet printing, aerosol-printing or screen printing. The curing process embeds the ionophore into the polymer matrix of the ion selective membrane 16. The combination of the pair of electrodes 14 and the ion selective membrane 16 may then be used in conductometric/impedimetric measurements, such that the ionic sensor 10 may function without a reference electrode to control the chemical potential of the analyte solution. Hence, the ionic sensor 10 also obviates the need for accessory sensing elements and can be provided as a self-sufficient and fully printed ionic sensor 10.

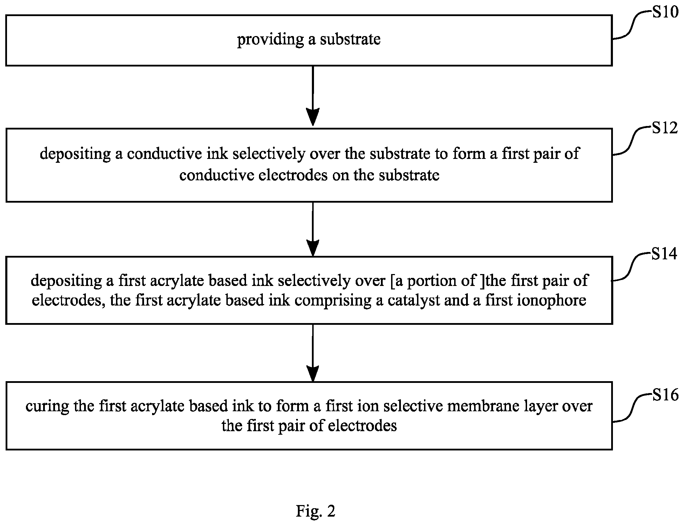

Fig. 2 illustrates a flowchart of a method for forming an ionic sensor 10 according to an embodiment of the invention. The method comprises providing a substrate 12 (S10) and depositing a conductive ink selectively over the substrate 12 to form a first pair of conductive electrodes 14 on the substrate 12 (S12). Further, the method comprises depositing a first acrylate based ink selectively over the first pair of electrodes 14, the first acrylate based ink comprising a catalyst and a first ionophore (S14), and curing the first acrylate based ink to form a first ion selective membrane layer 16 over the first pair of electrodes 14 (S16).

The substrate 12 may be a glass substrate or a polymer based substrate, such as a flexible PEN based substrate. The conductive ink may be ink-jetted or aerosol-jetted over the substrate 12 to define conductive traces on the substrate 12 including the pair of electrodes 14 and associated feed lines. An acrylate based ink containing the ionophore which may comprise at least 65 wt% of acrylate monomers can then be ink-jetted over the pair of electrodes 14 to form an ink layer over the pair of electrodes 14. The ink layer may be cured immediately following deposition to promote polymerization of the acrylate based ink into a polyacrylate ion selective membrane layer 16 coating the pair of electrodes 14 and a space between the respective electrodes 14a, 14b thereby forming an ionic sensor 10.

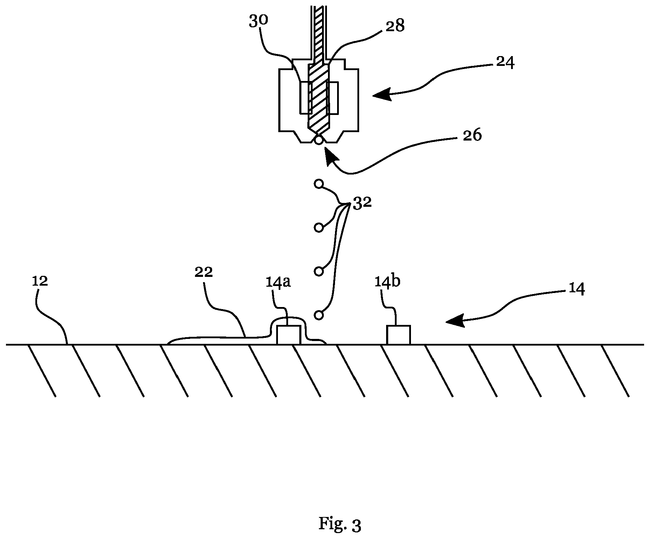

A schematic view of an intermediate stage in an exemplary fabrication process of the ionic sensor 10 is illustrated in Fig. 3. A substrate 12 has been provided and a pair of conductive electrodes 14 has been printed onto the substrate 12 with a conductive ink forming facing conductive traces 14a, 14b. A layer of an acrylate based ink 22 is selectively deposited with an ink-jet print head 24 in a sensing region associated with the pair of electrodes 14. The ink-jet print head 24 comprises a nozzle 26 to direct an acrylate ink 28 towards the substrate 12 in the form of ink droplets 32. Droplets 32 can be ejected from the nozzle 26 of the ink-jet print head 24 by activating the actuation member 30 arranged in the ink-jet print head 24. The actuation member 30 may be a thermal actuator which is selectively heated to eject droplets 32 from the nozzle 26. However, the actuation member 30 preferably comprises a piezoelectric element which is actuated with a time varying voltage signal to selectively emit ink droplets 32 from the nozzle 26 towards the sample and to build up the layer of the acrylate based ink 22. Preferably, the composition of the acrylate based ink is adjusted to common print head nozzles 26 such that the droplets 32 have sizes in the range of 1-150 pL for forming thin layers of the acrylate based ink 22 on the substrate 12. The substrate 12 may be moved relative to the print head 24 or vice versa in order to form a desired pattern of the layer of the acrylate based ink 22 with the droplets 32. Following deposition, the layer of the acrylate based ink 22 maybe photocured with a light source (not shown).

The acrylate based ink should be jettable with the associated ink-jet print head 24 and thus have a viscosity between 1 and 5 mPa·s for thermal ink-jet print heads 24 or a viscosity between 5-40 mPa·s for piezoelectric ink-jet print heads 24. In general, the viscosity should be selected to achieve an inverse of the Ohnesorg (Oh) number

$$Z = \frac{1}{Oh} = \frac{\sqrt{\gamma \rho a}}{\eta} \qquad\qquad (1)$$

between 1 and 15, where $\gamma$ is the surface tension in units of N/m, $\rho$ is the density in units of kg/m$^3$, $\alpha$ is the nozzle diameter of the print head in m, and $\eta$ is the dynamic viscosity in units of Pa·s. At the same time, the acrylate based ink should comprise substantially no plasticizer and substantially no solvent, in particular less than 10 wt%, preferably less than 5 wt%, of plasticizer and/or solvent. The solvent may evaporate during formation of the ion selective membrane 16, such that irregularities or voids may form. Further, the solvent may dissolve previously deposited layers and may hence impede additive manufacturing of the ion selective membrane 16 by sequentially depositing multiple layers of the acrylate based ink 22 and curing the layer 22 to fabricate the ion selective membrane 16. Hence, the acrylate based ink is preferably ink-jettable without the addition of a solvent, and the selection and ratios of acrylate monomers in the acrylate based ink should dominate the jetting properties of the acrylate based ink.

As an example, for a nozzle diameter of 20 $\mu$m at an ink temperature of at 20 °C, $Z \approx 29$ for a butyl acrylate monomer based ink, while $Z \approx 13$ for a 2-Ethylhexyl acrylate monomer based ink. Hence, while butyl acrylate monomers may be advantageously used as a reactive diluent in the acrylate based ink, the acrylate based ink should comprise a first acrylate component comprising an acrylate monomer with a longer alkyl group than butyl acrylate to facilitate ink-jet printing with larger nozzle diameters, such as at least 15%wt or at least 20 wt% of the first acrylate component. Further, the first acrylate component may improve miscibility with the ionophore and may reduce the glass transition temperature of the acrylate based ion selective membrane 16.

At the same time, the composition of the acrylate based ink should be selected such that a contact angle on the substrate 12 is less than $\pi/2$ to achieve sufficient surface wetting. Preferably, the composition of the acrylate based ink is selected such that a contact angle on PET/PEN/Polyimide foils is less than $\pi/2$ and may be further selected to be jettable with jetting frequencies in the range of 0.001-15 kHz. The acrylate based ink should also comprise at least 0.2 wt% of a lipophilic ion exchanger to form ion selective membranes compatible with impedimetric measurements. Preferably, the acrylate based ink does not comprise heat activated components which polymerize or boil in the temperature range of 20°C to 60°C in order to allow print head heating for improved jetting control.

The ink-jetted acrylate based ink layer 22 may form thin layers of the ion selective membrane 16 with minimum lateral feature size smaller than 1 mm or smaller than 100 $\mu$m, such as 50 $\mu$m or 20 $\mu$m, and may feature a thickness of approximately 0,5 $\mu$m to 10 $\mu$m, such as 2 $\mu$m, after photocuring. Ion selective membranes 16 of a desired thickness and/or shape may be formed by stacking a plurality of ion selective membrane layers. For example, after depositing and photocuring a first layer of the acrylate based ink 22 in the sensing region associated with the pair of electrodes 14, additional layers of the acrylate based ink 22 may be subsequently deposited and photocured to additively manufacture a three-dimensional membrane geometry. Hence, the ion selective membrane 16 of the ionic sensor 10 may comprise multiple selectively deposited ion selective membrane layers.

The one or more ion selective membrane layers may form a membrane geometry optimizing the efficiency of the ionic sensor 10 as a function of the geometry of the first pair of electrodes 14, such as by forming an ion selective membrane 16 with a thickness on the order of the spacing of the pair of electrodes 14, e.g. between 1/3 and 3 times the spacing of the pair of electrodes 14. Additionally, the layers of the acrylate based ink 22 may be selectively deposited only in the sensing area of the ionic sensor 10, thereby reducing material use and enabling the cheap manufacturing of an efficient ionic sensor 10.

Additional layers of variants of the acrylate based ink may be deposited on the substrate 12 to form complementing structures of the ionic sensor 10. For example, the acrylate based ink without the ionophore and without a lipophilic ion exchanger may be used to form passivating structures over the pair of electrodes 14 neighboring the ion selective membrane 16 (not shown) and/or may be deposited to form wells 18 on the substrate 12. Hence, the ionic sensor 10 may be packaged using substantially the same acrylate based ink to simplify the manufacturing process. However, the skilled person will appreciate that other passivating inks may be used instead of the variant of the acrylate based ink to form passivating structures on the ionic sensor 10, such as PMMA based inks. Further, additional inks may be deposited over the packaged ionic sensor 10 to provide adhesive layers to bond the substrate 12 to portions of microfluidic devices or to bond (microfluidic) channels or wells to the substrate 12.

In some embodiments, variants of the acrylate based ink are used to form complementing sensing structures in order to improve a selectivity and/or a sensitivity of the ionic sensor 10.

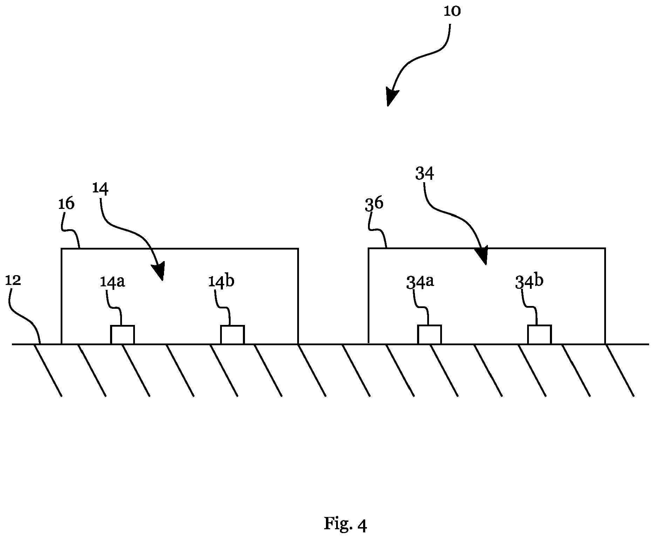

Fig. 4 illustrates an ionic sensor 10 according to another example. The ionic sensor 10 comprises a first pair of printed electrodes 14 on a substrate 12 covered by a first ion selective membrane 16 obtained by printing and curing layers of the first acrylate based ink 22 containing the first ionophore over the first pair of electrodes 14. The ionic sensor 10 further comprises a second pair of electrodes 34 printed on the substrate 12 in a region adjacent to the first pair of electrodes 14 and having substantially the same geometry as the first pair of electrodes 14 in the respective sensing region associated with the second pair of electrodes 34. A reference membrane 36 covers the second pair of electrodes 34 and is obtainable by selectively depositing one or more layers of a second acrylate based ink over the pair of second electrodes 34 and curing the one or more layers of the second acrylate based ink to form the reference membrane 36.

The second acrylate based ink corresponds substantially to the first acrylate based ink but does not comprise the first ionophore. In some embodiments, the second acrylate based ink simply omits the first ionophore. In other embodiments, the second acrylate based ink comprises a substituent for the first ionophore having similar polymeric binding characteristics and/or shape as the first ionophore, but not exhibiting selective binding to a target ion.

The second pair of electrodes 34 may then be excited with the same time varying excitation as the first pair of electrodes 14 during an impedimetric measurement of an ion concentration in an analyte solution 20. Since the reference membrane 36 does not comprise the first ionophore, in particular no ionophore, the reference membrane 36 may exhibit an impedimetric response independent of the binding of the target ion to the first ionophore. Instead the impedimetric response may result from the other constituents of the membrane 16, 36 and may accordingly feature systematic deviations, such as membrane capacity variation due to membrane swelling. The impedimetric response of the reference membrane 36 measured with the second pair of electrodes 34 may then be used to correct the impedimetric response of the first ion selective membrane 16 measured with the first pair of electrodes 14 to extract a signal associated primarily with the first ionophore (e.g. a difference signal).

In an illustrative embodiment, the inventors fabricated a suitable ion selective membrane 16 covering a sensing region of a first pair of gold plated Ag electrodes 14 printed on a PEN substrate 12 by ink-jetting a first ink-jettable acrylate based ink containing 75,1 wt% butyl acrylate, 20,7 wt% 2-Ethylhexyl acrylate, 0,2 wt% of 1,6-Hexanediol diacrylate as a crosslinker, 2 wt% of Sodium X ionophore, 1 wt% of commercially available Omnirad2100 photoactive catalyst, and 1 wt% of Potassium tetrakis(4-chlorophenyl)borate as a lipophilic ion exchanger, and curing the ink-jetted layer of acrylate based ink 22 with ultraviolet radiation to form a sequence of layers of a first ion selective membrane 16 having a total thickness of about 12 $\mu$m. A reference membrane 36 was formed by ink-jetting and photocuring a second acrylate based ink with the same constituents as the first ink-jettable acrylate based ink but omitting the sodium X ionophore onto a neighboring identical second pair of electrodes 36 on the PEN substrate 12.

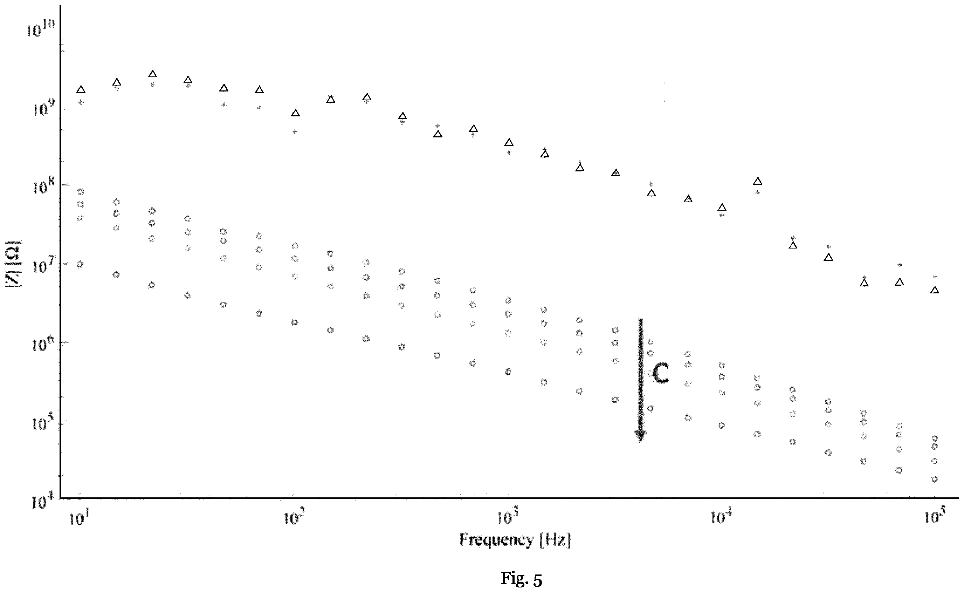

An exemplary impedimetric measurement of this ionic sensor 10 is illustrated in Fig. 5. The horizontal axis shows the frequency of the time varying (sinusoidal) AC excitation with an amplitude of about 10 mV in units of Hz. The vertical axis illustrates the absolute value of the complex impedance of the respective pair of electrodes in response to the excitation in units of $\Omega$. Triangles illustrate measurement points of a calibration measurement of the first pair of electrodes 14 without a liquid. Crosses indicate measurements performed with the second pair of electrodes 34 in an analyte solution 20 containing 43 mM (i.e. 43 mmol/Liter) of sodium ions (Na). Circles indicate measurements performed with the first pair of electrodes 14 in an analyte solution 20 containing a varying concentration of sodium ions, the concentration of sodium ions increasing along the vertical arrow C (with the data points corresponding to concentrations of 2.61 mM, 4.35 mM 21.7 mM and 43mM, respectively).

As can be seen from the variation of impendence in the measurements, the impedimetric response of the ionic sensor 10 measured with the first pair of electrodes 14 in the measurement range is governed by the concentration of sodium ions in the analyte solution 20 with the sodium concentration modifying the impedance by one order of magnitude. The measurements performed with the second pair of electrodes 34 show little variation of the impedance due to the presence of the sodium ions but show a frequency dependent shift of the impedance in aqueous solution. With the reference membrane 36 and the associated second pair of electrodes 34 shifts of the complex resistance of the membrane constituents due to the presence of the analyte solution 20 may then be corrected. The measurements with the second pair of electrodes 34 also confirm that the signal measured with the first pair of electrodes 14 originates from the interaction of the first ionophore with the sodium ions in the analyte solution and may allow excluding systematic errors.

As both membranes 16, 36 can be printed in essentially the same printing process, this additional functionality can be obtained without substantial increases in the cost of the ionic sensor 10. Moreover, the acrylate based ink may be used to print additional neighboring sensing structures to further increase sensitivity, selectivity, and/or measurement range of the ionic sensor 10.

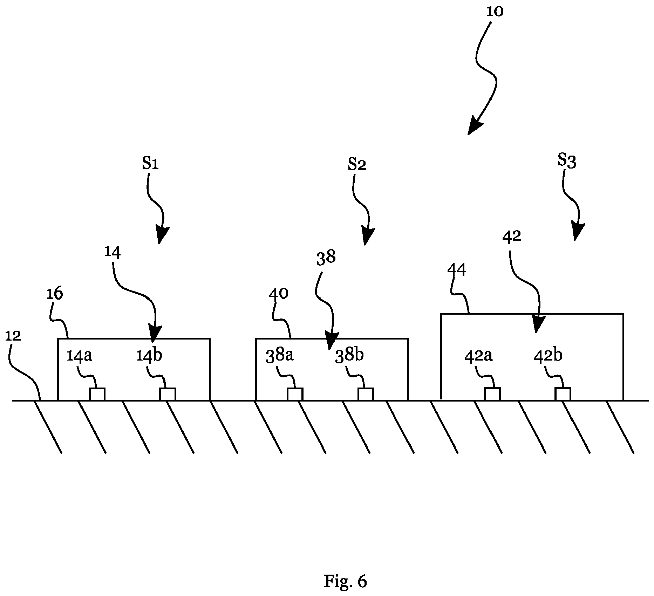

Fig. 6 illustrates a further ionic sensor 10 according to another example. The ionic sensor 10 comprises a first pair of electrodes 14, a third pair of electrodes 38 and a fourth pair of electrodes 42 printed onto a substrate 12 with a conductive ink. A first acrylate based ink comprising a first ionophore is deposited and photocured to form a first ion selective membrane 16 over the first pair of electrodes 14. A third acrylate based ink comprising a second ionophore is deposited and photocured to form a second ion selective membrane 40 over the third pair of electrodes 38. In addition, the first acrylate based ink comprising the first ionophore is also deposited over the fourth pair of electrodes 42 and photocured to form a third ion selective membrane 44. However, the third ion selective membrane 44 is formed with thicker or more layers of the first acrylate based ink 22 resulting in the third ion selective membrane 44 having larger physical dimensions.

The first pair of electrodes 14 and the first ion selective membrane 16 comprising the first ionophore form a first sensor S1 to detect a target ion as discussed in connection with previous examples and embodiments.

The third pair of electrodes 38 and the second ion selective membrane 40 form a second sensor S2 adapted to detect the same or a different target ion with the second ionophore embedded into the second ion selective membrane 40. The second ionophore is different from the first ionophore but does not necessarily need to be directed at a different target ion. For example, the second ionophore may selectively bind to the same target ion but may feature a different binding rate or stability of the bound complex such as to allow measurement of the target ion in a different concentration range. However, the second ionophore may also selectively bind to a different target ion such as to increase the versatility of the ionic sensor 10 and/or correct cross-selectivies of the first ionophore towards different ionic species.

The fourth pair of electrodes 42 covered by the third ion selective membrane 44 forms a third sensor S3 with different physical dimensions. The third sensor S3 may be employed to correct for diffusion limited effects of the ionic sensor 10 in an analyte solution 20 or may target different ionic concentrations in the analyte solution 20. For example, the third sensor S3 having a thicker third ion selective membrane 44 may be sensitive to higher concentrations of the target ion in the analyte solution 20 than the first sensor S1. However, the skilled person will appreciate that the third ion selective membrane 44 may also be formed with smaller physical dimensions than the first ion selective membrane 14, such as to be sensitive to lower concentrations of the target ion in the analyte solution 20 than the first sensor S1.

Each of the sensors S1-S3 may be packaged using passivating inks which may be ink-jetted over exposed electrode surfaces and/or substrate surfaces and photocured to obtain passivating layers on exposed electrode surfaces, and additional pairs of electrodes 34, 38, 42 may be printed onto the substrate 12 and functionalized with additional membranes 16, 36, 40, 44, such as to provide additional ion selective membranes 16, 40, 44 containing different ionophores and/or to provide reference membranes 36 to correct the electrochemical response of the sensors. Hence, a versatile and fully printed ionic sensor 10 may be provided in an efficient fabrication process.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | ionic sensor |
| 12 | substrate |
| 14 | first pair of electrodes |
| 14a, 14b | first and second electrode of the first pair of electrodes |
| 16 | first ion selective membrane |
| 18 | walls |
| 20 | analyte solution |
| 22 | layer of the acrylate based ink |
| 24 | inkjet printhead |
| 26 | nozzle |
| 28 | acrylate based ink |
| 30 | actuation member |
| 32 | ink droplet |
| 34 | second pair of electrodes |
| 36 | reference membrane |
| 38 | third pair of electrodes |
| 40 | second ion selective membrane |
| 42 | fourth pair of electrodes |
| 44 | third ion selective membrane |
| S1 | first sensor |

S2        second sensor
S3        third sensor

**Claims**

1. A method of forming an ionic sensor (10), the method comprising the steps of:

   - providing (S10) a substrate (12);
   - depositing (S12) a conductive ink selectively over the substrate (12) to form a first pair of conductive electrodes (14) on the substrate (12);
   - depositing (S14) a first acrylate based ink selectively over the first pair of electrodes (14), the first acrylate based ink comprising a catalyst and a first ionophore; and
   - curing (S16) the first acrylate based ink to form a first ion selective membrane (16) layer over the first pair of electrodes (14).

2. The method according to claim 1, wherein the acrylate based ink is selectively deposited by printing, in particular ink-jetting, the acrylate based ink over the first pair of electrodes (14) and/or
   wherein the first acrylate based ink in particular has a viscosity between 1-40 mPa·s, preferably between 5-40 mPa·s, before selectively depositing the first acrylate based ink over the first pair of electrodes (14); and/or
   wherein the conductive ink is deposited on the substrate (12) by selectively printing, in particular ink-jetting, the conductive ink over the substrate (12).

3. The method according to any one of the preceding claims, wherein the first acrylate based ink comprises at least 15%wt or at least 20%wt of a first acrylate component, the first acrylate component comprising a longer alkyl group than butyl acrylate, and in particular consists of one or more monomers selected from the group of Hexyl acrylate, Hexyl methacrylate, 2-Ethylhexyl acrylate, 2-Ethylhexyl methacrylate, Heptyl acrylate, Octyl acrylate, Octyl methacrylate, Nonyl acrylate, Nonyl methacrylate, Decyl methacrylate, Dodecyl acrylate, Dodecyl methacrylate, and Octadecyl methacrylate; and/or
   wherein the first ion selective membrane (16) layer has a glass transition temperature below -20 °C; and/or
   wherein the first acrylate based ink comprises a second acrylate component, the second acrylate component being derived from methyl acrylate, ethyl acrylate, propyl acrylate or butyl acrylate, and in particular consists of one or more monomers selected from the group of Methyl acrylate, Ethyl acrylate, Propyl acrylate, Isopropyl acrylate, Butyl acrylate, Isobutyl acrylate, sec-Butyl acrylate, 2-Ethylbutyl acrylate; and/or wherein the first acrylate based ink does not comprise more than 10 %wt of a plasticizer, in particular less than 5% wt of a plasticizer, preferably no plasticizer, and/or does not comprise a solvent; and/or

4. The method according to any one of the preceding claims, wherein the catalyst is a photoinitiator and curing the first acrylate based ink comprises photocuring the first acrylate based ink with irradiation adapted to activate the photoinitiator, wherein the photoinitiator and its concentration in the first acrylate based ink are in particular selected to obtain gelation of the first ion selective membrane (16) layer after an irradiation dose of less than 10 J cm$^{-2}$; and/or
   wherein the substrate (12) comprises an insulating sheet, in particular a polymer based insulating sheet, preferably a polymer based flexible substrate, most preferably a PEN, PET, and/or polyimide based foil.

5. The method according to any one of the preceding claims, wherein the method comprises depositing multiple layers of the first acrylate based ink over the first pair of electrodes (14) to form a first ion selective membrane (16).

6. The method according to any one of the preceding claims, the method further comprising:

   - depositing a second pair of electrodes (34) over the substrate (12); and
   - selectively depositing a second acrylate based ink over the second pair of electrodes (34), the second acrylate based ink having substantially the same composition as the first acrylate based ink but does not contain the first ionophore; and
   - curing the second acrylate based ink to form a reference membrane (36) layer over the second pair of electrodes (34); and/or

   wherein the method further comprises:

- depositing a third pair of electrodes (38) over the substrate (12);
- selectively depositing a third acrylate based ink over the third pair of electrodes (38) the third acrylate based ink comprising a catalyst and a second ionophore, the second ionophore being different from the first ionophore; and
- curing the third acrylate based ink to form a second ion selective membrane (40) layer over the third pair of electrodes (38); and/or

wherein the method further comprises:

- depositing a fourth pair of electrodes (42) over the substrate (12);
- selectively depositing the first acrylate based ink over the fourth pair of electrodes (42); and
- curing the first acrylate based ink to form a third ion selective membrane (44) over the fourth pair of electrodes (42),
- wherein the third ion selective membrane (44) layer has a thickness which is different from a thickness of a first ion selective membrane (16) formed from one or more of the first ion selective membrane (16) layers.

7. The method according to any one of the preceding claims, the method further comprising:

- depositing an insulating ink over the substrate (12) to insulate the first pair of electrodes (14) in a region adjacent to the first ion selective membrane (16) layer and/or to form a well surrounding the first ion-selective membrane layer, the well being configured to contain an analyte solution (20); and/or
- depositing an adhesive ink to form an adhesive layer surrounding the first ion selective membrane (16) layer for bonding a chamber to the substrate (12), the chamber being configured to contain the analyte solution (20).

8. The method according to any one of the preceding claims, wherein the first acrylate based ink comprises or substantially consists of:

- Between 15% wt and 99.7% wt of a first acrylate component comprising an acrylate monomer having a longer alkyl group than butyl acrylate;
- Between 0% wt and 85% wt of a second acrylate component consisting of one or more monomers selected from the group of Methyl acrylate, Ethyl acrylate, Propyl acrylate, Isopropyl acrylate, Butyl acrylate, Isobutyl acrylate, sec-Butyl acrylate, 2-Ethylbutyl acrylate;
- Between 0.1% wt and 15%wt of a ionophore;
- Between 0.1% wt and 5%wt of a lipophilic ion exchanger;
- Between 0% wt and 10%wt of a crosslinker; and
- Between 0.1% wt and 5%wt of a photoactive catalyst.

9. An ionic sensor (10) comprising:

- a substrate (12);
- a first pair of printed conductive electrodes (14) comprising printed features formed of a conductive ink printed selectively over the substrate (12); and
- one or more first ion selective membrane (16) layers constituting a first ion selective membrane (16), the one or more first ion selective membrane (16) layers being obtainable by curing a first acrylate based ink, the first acrylate based ink comprising a first ionophore and a photoactive catalyst, with irradiation adapted to activate the photoactive catalyst.

10. The ionic sensor (10) of claim 9, wherein the first ion selective membrane (16) comprises at least two first ion selective membrane (16) layers.

11. The ionic sensor (10) of any one of claims 9 or 10, further comprising:

- a second pair of printed conductive electrodes (34) over the substrate (12); and
- one or more reference membrane (36) layers obtainable by curing a second acrylate based ink selectively deposited over the second pair of electrodes (34), the second acrylate based ink having substantially the same composition as the first acrylate based ink but does not contain the first ionophore; and/or

wherein the ionic sensor (10) further comprises

- a third pair of printed conductive electrodes (38) over the substrate (12); and
- one or more second ion selective membrane (40) layers constituting a second ion selective membrane (40), the one or more second ion selective membrane (40) layers being obtainable by curing a third acrylate based ink comprising a second ionophore and selectively deposited over the third pair of electrodes (38), the second ionophore being different from the first ionophorewherein the ionic sensor (10) in particular comprises an equal number of reference membrane (36) layers and first ion selective membrane (16) layers; and/or

wherein the ionic sensor (10) further comprises:

- a fourth pair of printed conductive electrodes (42) over the substrate (12); and
- one or more third ion selective membrane (44) layers over the fourth pair of electrodes (42) constituting a third ion selective membrane (44), the one or more third ion selective membrane (44) layers being obtainable by curing the first acrylate based ink comprising the first ionophore over the fourth pair of printed conductive electrodes (42),

wherein the number of first ion selective membrane (16) layers and the number of third ion selective membrane (44) layers are different.

12. The ionic sensor (10) of any one of claims 9 to 11, further comprising:

- one or more insulating layers obtainable by curing an insulating ink selectively deposited in a region adjacent to the one or more first ion selective membrane (16) layers to insulate the first pair of electrodes (14); and/or
- a printed well obtainable by curing an insulating ink selectively deposited to surround the first ion selective membrane (16) layer over the first pair of electrodes (14), the printed well being configured to contain an analyte solution (20); and/or

an adhesive layer of or obtainable by curing an adhesive ink, the adhesive layer surrounding the first ion selective membrane (16) layer for bonding a chamber to the substrate (12), the chamber being configured to contain the analyte solution (20)wherein the ionic sensor (10) in particular comprises the chamber bonded to the substrate (12).

13. The ionic sensor (10) of any one of claims 9 to 12, wherein the substrate (12) comprises an insulating sheet, in particular a polymer based insulating sheet, preferably a polymer based flexible substrate, most preferably a PEN, PET, and/or polyimide based foil; and/or
wherein the one or more first ion selective membrane (16) layers have a glass transition temperature below -20 °C.

14. The ionic sensor (10) of any one of claims 9 to 13, wherein the first acrylate based ink is selected to have a viscosity between 1-40 mPa·s, in particular between 5-40 mPa·s, for ink-jet printing the first acrylate based ink over the first pair of electrodes (14); and/or
wherein the one or more first acrylate based membrane layers comprise at least 15%wt or at least 20%wt of a first acrylate component, the first acrylate component comprising a longer alkyl group than butyl acrylate, and in particular consists of one or more monomers selected from the group of Hexyl acrylate, Hexyl methacrylate, 2-Ethylhexyl acrylate, 2-Ethylhexyl methacrylate, Heptyl acrylate, Octyl acrylate, Octyl methacrylate, Nonyl acrylate, Nonyl methacrylate, Decyl methacrylate, Dodecyl acrylate, Dodecyl methacrylate, and Octadecyl methacrylate; and/or
wherein the one or more first acrylate based membrane layers comprise a second acrylate component, the second acrylate component being derived from methyl acrylate, ethyl acrylate, propyl acrylate or butyl acrylate, and in particular consists of one or more monomers selected from the group of Methyl acrylate, Ethyl acrylate, Propyl acrylate, Isopropyl acrylate, Butyl acrylate, Isobutyl acrylate, sec-Butyl acrylate, 2-Ethylbutyl acrylate.

15. The ionic sensor (10) of any one of claims 9 to 14, wherein the first acrylate based ink does not comprise more than 10 %wt of a plasticizer, in particular less than 5% wt of a plasticizer, preferably no plasticizer, and/or does not comprise a solvent.

Fig. 1

providing a substrate — S10

↓

depositing a conductive ink selectively over the substrate to form a first pair of conductive electrodes on the substrate — S12

↓

depositing a first acrylate based ink selectively over [a portion of ]the first pair of electrodes, the first acrylate based ink comprising a catalyst and a first ionophore — S14

↓

curing the first acrylate based ink to form a first ion selective membrane layer over the first pair of electrodes — S16

Fig. 2

Fig. 3

Fig. 4

Fig. 5

Fig. 6

Europäisches
Patentamt

European
Patent Office

Office européen
des brevets

## EUROPEAN SEARCH REPORT

Application Number

EP 20 18 2319

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 004 442 A (CHOULGA ALEXANDRE [DE] ET AL) 21 December 1999 (1999-12-21)<br>* figures 1-10 *<br>* column 3, line 7 - column 19, line 27 *<br>----- | 1-15 | INV.<br>G01N27/333 |
| X | Universiti Kebangsaan Malaysia ET AL: "SCREEN-PRINTED POTASSIUM ION SENSOR FABRICATED FROM PHOTOCURABLE AND SELF-PLASTICIZED ACRYLIC FILM Lee yook heng",<br>ArticleinJournal of Physical Therapy Science,<br>31 January 2006 (2006-01-31), XP055750046,<br>Retrieved from the Internet:<br>URL:https://www.researchgate.net/profile/Lee_Yook_Heng/publication/43920155_SCREEN-PRINTED_POTASSIUM_ION_SENSOR_FABRICATED_FROM_PHOTOCURABLE_AND_SELF-PLASTICIZED_ACRYLIC_FILM/links/0c96053b71e3ee412c000000.pdf [retrieved on 2020-11-12]<br>* page 141, paragraph 1 - page 144, paragraph 1 *<br>----- | 1-15 | |
| X | WO 2016/056890 A1 (MIMOS BERHAD [MY]) 14 April 2016 (2016-04-14)<br>* figure 1 *<br>* paragraph [0006] - paragraph [0020] *<br>----- | 1-15 | TECHNICAL FIELDS SEARCHED (IPC)<br><br>G01N |
| | -/-- | | |

The present search report has been drawn up for all claims

| Place of search | Date of completion of the search | Examiner |
|---|---|---|
| Munich | 16 November 2020 | Colasanti, Katharina |

EPO FORM 1503 03.82 (P04C01)

page 1 of 3

Europäisches
Patentamt

European
Patent Office

Office européen
des brevets

# EUROPEAN SEARCH REPORT

Application Number

EP 20 18 2319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BANANEZHAD ASMA ET AL: "Large-scale fabrication of flexible solid-state reference electrodes", JOURNAL OF ELECTROANALYTICAL CHEMISTRY, ELSEVIER, AMSTERDAM, NL, vol. 847, 22 June 2019 (2019-06-22), XP085755869, ISSN: 1572-6657, DOI: 10.1016/J.JELECHEM.2019.113241 [retrieved on 2019-06-22] * the whole document * | 2,4,13 | |
| X | WO 00/54039 A1 (HALL ELIZABETH ANNE HOWLETT [GB]) 14 September 2000 (2000-09-14) * page 1 - page 28 * | 1-15 | |
| A | QI ZHANG ET AL: "Plasticizer-Free Thin-Film Sodium-Selective Optodes Inkjet-Printed on Transparent Plastic for Sweat Analysis", ACS APPLIED MATERIALS & INTERFACES, vol. 12, no. 23, 19 May 2020 (2020-05-19), pages 25616-25624, XP055750047, US ISSN: 1944-8244, DOI: 10.1021/acsami.0c05379 * the whole document * | 2,5,10, 14 | |
| A | CN 101 871 912 A (UNIV ZHEJIANG) 27 October 2010 (2010-10-27) * figure 1 * * paragraph [0053] - paragraph [0061] * | 6,11 | TECHNICAL FIELDS SEARCHED (IPC) |

-/--

The present search report has been drawn up for all claims

| Place of search | Date of completion of the search | Examiner |
|---|---|---|
| Munich | 16 November 2020 | Colasanti, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 18 2319

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANG HONGJIE ET AL: "Inkjet-printed Solid-state Potentiometric Nitrate Ion Selective Electrodes for Agricultural Application", 2019 IEEE SENSORS, IEEE, 27 October 2019 (2019-10-27), pages 1-4, XP033685557, DOI: 10.1109/SENSORS43011.2019.8956650 [retrieved on 2020-01-10] * Section: "Abstract"; page 1 * | 6,11 | |

TECHNICAL FIELDS
SEARCHED (IPC)

The present search report has been drawn up for all claims

| Place of search | Date of completion of the search | Examiner |
|---|---|---|
| Munich | 16 November 2020 | Colasanti, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 2319

This annex lists the patent family members relating to the patent documents cited in  the above-mentioned European search report.
The members are as contained in the European Patent Office EDP file on
The European Patent Office is in no way liable for these particulars which are merely given for the purpose of information.

16-11-2020

| Patent document cited in search report | | Publication date | Patent family member(s) | | Publication date |
|---|---|---|---|---|---|
| US 6004442 | A | 21-12-1999 | DE | 4437274 A1 | 25-04-1996 |
| | | | EP | 0787290 A1 | 06-08-1997 |
| | | | JP | H10507521 A | 21-07-1998 |
| | | | US | 6004442 A | 21-12-1999 |
| | | | WO | 9612176 A1 | 25-04-1996 |
| WO 2016056890 | A1 | 14-04-2016 | NONE | | |
| WO 0054039 | A1 | 14-09-2000 | AU | 2933200 A | 28-09-2000 |
| | | | WO | 0054039 A1 | 14-09-2000 |
| CN 101871912 | A | 27-10-2010 | NONE | | |

EPO FORM P0459

For more details about this annex : see Official Journal of the European Patent Office, No. 12/82

## REFERENCES CITED IN THE DESCRIPTION

**Non-patent literature cited in the description**

- **DAY et al.** Impedance based sensor for potassium ions. *Analytica Chimica Acta,* November 2018, vol. 1034, 39-45
- **AICHER et al.** A novel thin film impedance Ca ion sensor for drinking water. *Sensors and Actuators B,* 2017, vol. 244, 11103-1112

- **HENG et al.** Producing "Self-Plasticizing" Ion Selective Membranes. *Anal. Chem.,* 2000, vol. 72, 42-51